# EUROPEAN PATENT SPECIFICATION

(11) **EP 1 246 317 B1**
(45) Date of publication and mention of the grant of the patent: **05.01.2005**
(21) Application number: 01420073.7
(22) Date of filing: 29.03.2001
(51) Int. Cl.: H01R 13/703, H04Q 1/14

(54) **Terminal strip for interconnecting lines**
Anschlussleiste für verknüpfte Leitungen
Borne de raccordement pour lignes interconnectées

(43) Date of publication of application: 02.10.2002
(73) Proprietor: 3M Innovative Properties Company, St. Paul, Minnesota 55133-3427 (US)
(72) Inventor: Bonvallat, Pierre, 74300 Cluses (FR); Fasce, Xavier, 74970 Marignier (FR)
(74) Representative: Palix, Stéphane

(56) References cited:
- GB-A- 2 310 962
- US-A- 5 816 836
- US-A- 6 069 951

## Description

The present invention relates to a terminal strip for interconnecting electrical lines, especially telephone or computer lines.

### Background of the invention

Documents US- 5,388,999, GB- 2,310,962, EP- 0,338,187 and EP- 0,524,115 describe terminal strips.

In general, terminal strips are mounted on metal fastening rails, which often form an earthed support frame. They are mounted in such a way that their lateral faces are in contact or are very close to one another.

However, the terminal strips of the prior art have a substantial thickness. This results in a decrease in the number of terminal strips that can be mounted on a given length of metal fastening rail. The main drawback of such existing terminal strips is that they are dimensioned in such a way that the capacity of a length of a fastening rail forming a support frame is limited.

Furthermore, these terminal strips comprise two rows of conducting elements, called "insulation-displacement contacts", placed side by side, parallel to one another. They each have an insulation-displacement end configured to receive a line wire and they are aligned face-to-face in two rows in the body of the terminal strip. These insulation-displacement contacts are connected to the conductors of the wire or to jumpers. Because of the parallel rows, the input array and output array of the terminal strip are located on the same upper longitudinal side of the terminal strip. This creates a particularly dense connection and entanglement of wires, together with a packet of wires.

Yet another drawback of the terminal strips of the prior art is that in order to change the connections, access to a terminal strip located in the middle of other terminal strips, when such strips are placed along a metal fastening rail in a group and once the terminal strip has been connected, is difficult.

US- 4,618,204 discloses connection devices, in particular for telecommunication lines, comprising conductor elements arranged side by side parallel to each other, each split at one end in order to receive a line wire, the conductor elements being retained axially between the two assembled parts of an insulating casing and constituting two alignments, rows or arrays arranged in facing relationship in said casing. The split end parts of the plugs are arranged in the direction of the longitudinal side of one of the parts of the casing, on the side opposite the open assembly side of said part of the casing. The longitudinal side of the casing comprises, on the one hand, driving or guiding slots provided opposite the slots of the end parts, transversely with respect to said longitudinal side and opening out on the two side faces adjacent said longitudinal side and on the other hand, access slots, passing through the same longitudinal side of the casing, longitudinally between the two alignments of split end parts of conductor elements.

However, the drawback with this type of connection devices remains its thickness due to the presence of the two rows of conducting elements. Another drawback is that means for stowing the connection wires is missing. Yet another drawback with the connection devices of the prior art is that the input array is not separated from the output array.

US- 6,069,951 relates to a distribution block for telecommunications and data technology, in particular for the main distribution frame of telephone and data lines, having contact springs. The springs are arranged in the interior of the modular distribution block and are formed from connection contacts, using insulation-displacement contacts in the front and rear side of the block and from a telecommunications contact in the central region. A pick-off contact is formed in the front region of the contact spring. A distribution block of the generic type is provided which contains an uncomplicated contact element and on which the wire routing is improved and in which reliable fitting of the cable wires is ensured. The contact spring is formed from a base part and a contact spring part fitted to it, fixing points for the longitudinal direction and an opening for the fitted contact spring part to pass through being provided in the central region of the base part. A hole is arranged in the front region of the base part in order to fix the position of the contact spring part to be fitted.

US- 5,816,836 describes a telecommunications and data connector with a connector first side assembly having a first side base portion formed of plastic and defining a plurality of grooves. The connector first side assembly also includes a first side plurality of contact elements. Each of the contacts extends from a wire end toward an assembly connection end. Each of the first side contact elements is movable between a contact position, and a non-contact position. A connector second side assembly is provided which is substantially identical to the connector first side assembly. The connector first side assembly and the connector second side assembly are connectable in a mated position wherein individual contact areas of the first side plurality of contacts make electrical contact with the corresponding individual contact areas of the second plurality of electrical contacts.

### Summary of the invention

According to the present invention, a terminal strip for interconnecting electrical lines, especially telephone or computer lines, comprising a single row of mutually parallel, first conducting elements placed side-by-side, each first conducting element having an insulation-displacement end configured to receive a line wire, that is oriented towards the upper longitudinal side of the terminal strip, and a single row of mutually parallel, second conducting elements placed side-by-side, each second conducting element having an insulation-displacement end configured to receive a line wire, that is oriented towards the lower longitudinal side of the terminal strip, the first and second conducting elements being in two parts, and each first conducting element being separated from a second conducting element by a point of interruption is characterized
- in that the insulation-displacement ends of the first and second conducting elements all lie within a same plane; and
- in that said point of interruption is offset with respect to the plane defined by the first and second conducting elements.

Preferably, the first conducting element comprises at least one moveable flexible tab which, when installed in the terminal strip, is positioned on and touches a fixed part of the second conducting element.

In the upper longitudinal side of the terminal strip, and adjacent to each first conducting element, access holes are preferably provided for the insertion of a conducting test plug or an insulating interrupt plug. The conducting plug or the insulating plug can be inserted through the access hole into the body of the terminal strip and adjacent to the point of interruption such that it can be slipped between the flexible tab and the fixed part.

The upper and lower longitudinal sides of the terminal strip preferably has a push-in slot for each insulation-displacement end. These slots extend transversely from the upper or lower longitudinal sides, respectively, and extend into the body of the terminal block along one of the lateral face.

In one particular embodiment, the terminal strip includes lead-in channels moulded or formed in, or attached to one of the lateral faces of the terminal block. Preferably, the channels are located on the same lateral face of the terminal block as the push-in slots. Each of the channels curves away from one of the transverse sides towards at least one of the push-in slots, that is to say, towards at least one insulation-displacement contact. The terminal strip may also include a smooth lateral face on the opposite the lateral face having the push-in slots.

In order to allow it to be fastened to the support frame, the terminal strip preferably includes positioning and fastening means on each of the two transverse sides. These positioning and fastening means may be located on the two transverse sides and near the two upper and lower longitudinal sides. In order to allow the terminal strips to be fastened together, the terminal strip advantageously includes interlocking means, located on each of the two lateral faces such that the interlocking means on one face fits into the interlocking means on the other face.

In a particular embodiment, the terminal strip includes a drain collector near the upper longitudinal side. In order to identify a group of terminal strips mounted on the rail forming the support frame, the last terminal strip of a series of terminal strips positioned on the rail may include a first label holder which also serves to close off the last lead-in channels of the last terminal strip. In order to identify the terminal strips, these may include a second label holder located on their upper longitudinal side.

### Brief description of the drawings

The invention will be thoroughly understood from the various advantages and various characteristics which will become apparent from the following description, the non-limiting embodiment, and with reference to the appended schematic drawings in which:
- Figure 1 shows a side view of an interconnection terminal strip;
- Figure 2 shows another side view of the interconnection terminal strip;
- Figure 3 shows a longitudinal top view of the interconnection terminal strip;
- Figure 4 shows a transverse view of the interconnection terminal strip;
- Figure 5 shows a side view of the interconnection terminal strip mounted on a support frame provided with a cable;
- Figure 6 shows a partial side view, with a cut-away in cross section, of part of the interconnection terminal strip;
- Figure 7A shows a cross section of the interconnection terminal strip on the line VII-VII in Figure 2;
- Figure 7B shows the same cross section with a test plug ready to be inserted;
- Figure 7C shows the same cross section with the test plug fully inserted; and
- Figure 8 shows various transverse views with a cut-away of a rail forming a support frame provided with interconnection terminal strips.

### Description of the preferred embodiments

A multicontact interconnection terminal strip 1 has two lateral faces 2, 3 of a overall rectangular shape, a left transverse side 4, a right transverse side 6, an upper longitudinal side 7 and a lower longitudinal side 8.

The upper longitudinal side 7 has a row of upper metal insulation-displacement contacts 9. The lower longitudinal side 8 has a row of lower metal insulation-displacement contacts 11. These insulation-displacement contacts 9, 11 lie within the same plane P. This plane P is parallel to the two lateral faces 2, 3. The upper and lower insulation-displacement contacts 9, 11 each include a slot 12 for the insertion of a line wire. These insertion slots 12 always face push-in slots 13 made in the body of the terminal strip. The push-in slots 13 are made in one of the lateral faces 3 of the terminal strip. The push-in slots 13 extend upwards in the case of those associated with the upper contacts 9 and downwards in the case of those associated with the lower contacts 11.

The upper contacts 9 are physically separate from the lower contacts 11. The upper contacts 9 each have a flexible tongue 14 located at their end on the opposite side from the insulation-displacement end. The lower contacts 11 each have a rigid part 16 located at their end on the opposite side from the insulation-displacement end. This flexible tongue 14 and this rigid part 16 will touch each other and thus form a point of contact and of interruption 17.

The rest position of the flexible tongue 14 of the upper insulation-displacement contacts 9 is offset from the plane P defined by the upper 9 and lower 11 contacts. The rigid part 16 of the lower contact 11 is also offset with respect to the plane P defined by these upper and lower contacts 9, 11. This means that the point of interruption is offset with respect to this same plane P.

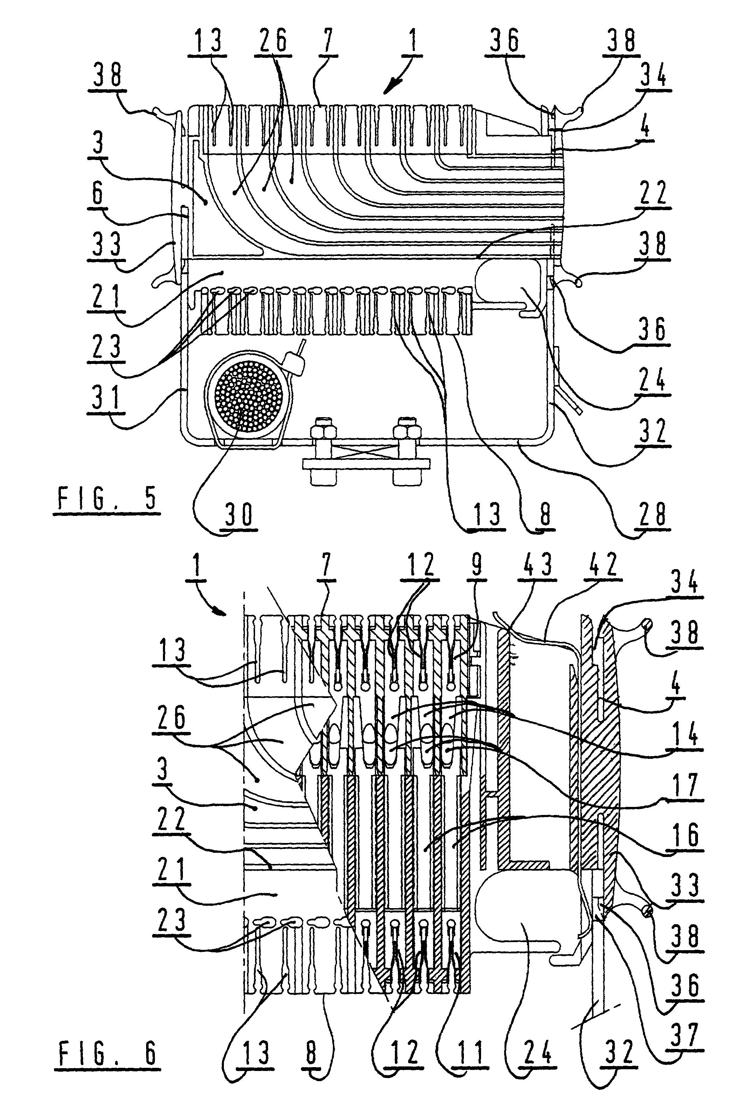

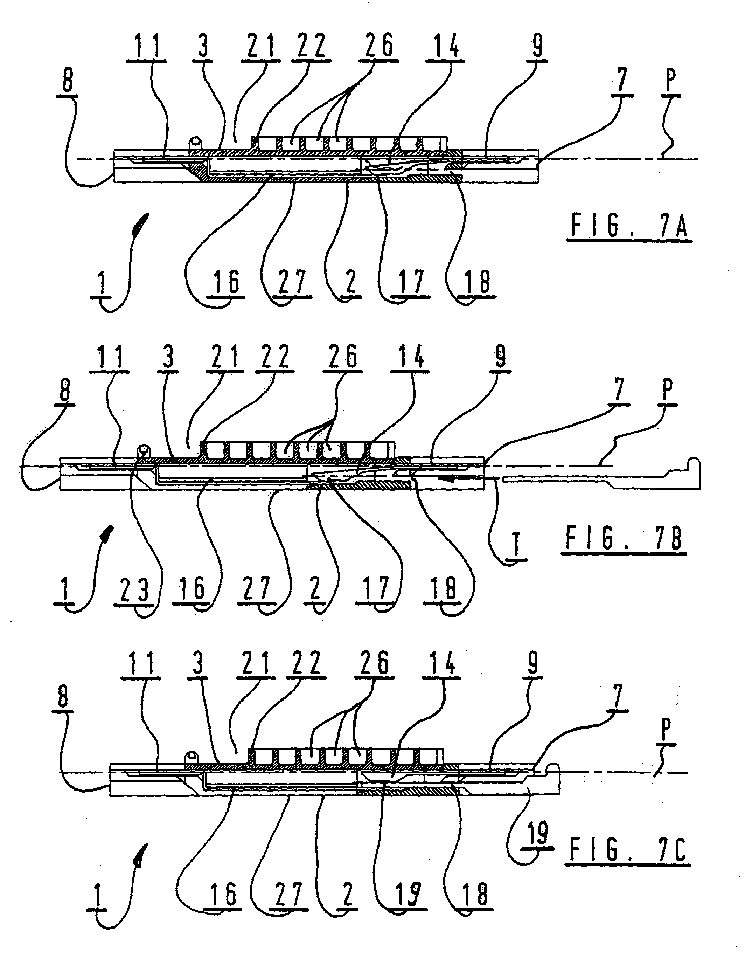

Provided, in the terminal strip 1, for each of the upper insulation-displacement contacts 9 is an upper hole 18 intended for the insertion of a plug 19. This plug (see more particularly Figures 7B and 7C) can be inserted into the terminal strip (in the direction of the arrow T) up to the point of interruption 17 between the flexible tongue 14 of the insulation-displacement contact 9 and the rigid part 16 of the lower insulation-displacement contact 11. Figure 7A clearly shows the two possible positions of the flexible tongue 14, the position of the tongue shown along the plane P being that in which the flexible tongue 14 is forced to move away from its rest position when the plug 19 is inserted. The plug 19 is inserted by moving it parallel (along the arrow T) to the longitudinal axis of the upper and lower insulation-displacement contacts 9 and 11, and thus also parallel to the plane P.

Two types of test plug 19 can be used. Insulating test plugs can be used to make an interruption between the upper contact 9 and the lower contact 11. Conducting test plugs can be used to measure and test the state and quality of the conducting lines connected to the terminal strip.

In order to connect an input array, a longitudinal channel 21 is provided beneath the push-in slots 13, this channel being designed to lead in the line wires by an insertion of the same. The channel 21 is bounded in its upper part by a rib 22. In its lower part, the channel is bounded by a comb 23. If, as depicted in the drawings, there are 16 lower insulation-displacement contacts 11, then 16 wires will pass through a ring 24 and be "combed" by the 16 interstices lying between the tines defining the comb 23. By a better grip of the wire, this allows the mechanical strength and a better conductivity of the lower insulation-displacement contacts 11, and also the conditions of connecting to be improved. Each of the wires is connected right opposite each of the push-in slots 13.

In order to connect an output array, the same lateral face 3 includes a series of lead-in channels 26. Each of the lead-in channels 26 extend from the transverse side 4 as far as a push-in slot 13 for an upper insulation-displacement contact 9. If 16 upper insulation-displacement contacts 9 are provided (as depicted in the drawings), then 16 lead-in channels 26 will be located on the lateral face 8. Preferably, the lead-in channels 26 will form a substantially rounded bend to avoid sharp bend in the wires that will pass through the lead-in channels 26. The lead-in channels 26 permit real ordering of the connection wires, thus conserving space.

A completely flat plate 27 has been provided on the other lateral face 2. When the interconnection terminal strip is inserted on a rail forming a support frame 28, the plate 27 of one of the terminal strips closes off the lead-in channels 26 of the previous terminal strip, and so on until the end of the rail. At the end, in order to close off the open lead-in channels 26 of the last terminal strip, either a piece which also forms a label holder 29, or a simple plate, has been provided.

A cable with an insulating jacket and its line wires 30 is advantageously positioned at the bottom of the U-shaped rail forming the support frame 28.

In order to be able to fasten the interconnection terminal strip to the rail forming the support frame 28 having the shape of a U with two upwardly extending side arms 31, 32, two insertion and fastening means are provided on each side of the terminal strip. These means are in the form of a jamb 33 attached at its centre to each of the transverse sides, namely the left side 4 and the right side 6. These two jambs 33 thus define four slots 34 into which the two side arms 31, 32 of the rail 28 may be inserted.

The jambs 33 include a catch 36 which projects inside the slot 34 and is intended to engage with openings 37 present in the side arms 31, 32 of the rail 28. Two of the slots 34 extend upwards along the transverse side of the terminal strip and open to the upper longitudinal side 7, whereas the other two slots 34 extend downwards along the transverse side of the terminal strip and open to the lower longitudinal side 8. The two jambs 33 lying on each side of the terminal strip also each include two gripping hooks 38 intended to move the jambs 33 apart on the transverse side in question, and to widen the slots 34, so as to allow the two side arms 31, 32 of the rail forming a support frame 28 to be inserted, and also extracted after having disengaged the catches 36.

The operator thus wires up the terminal strip by firstly mounting the terminal strip on the rail forming the support frame 28, presenting the lower longitudinal side 8 upwards and inserting the line wires into the lower insulation-displacement contacts 11. Next, the operator releases the terminal strip and turns it upside down in order to fit it again on the rail forming the support frame 28, so as to be able to insert the line wires into the upper insulation-displacement contacts 9, the upper longitudinal side 7 then being oriented upwards.

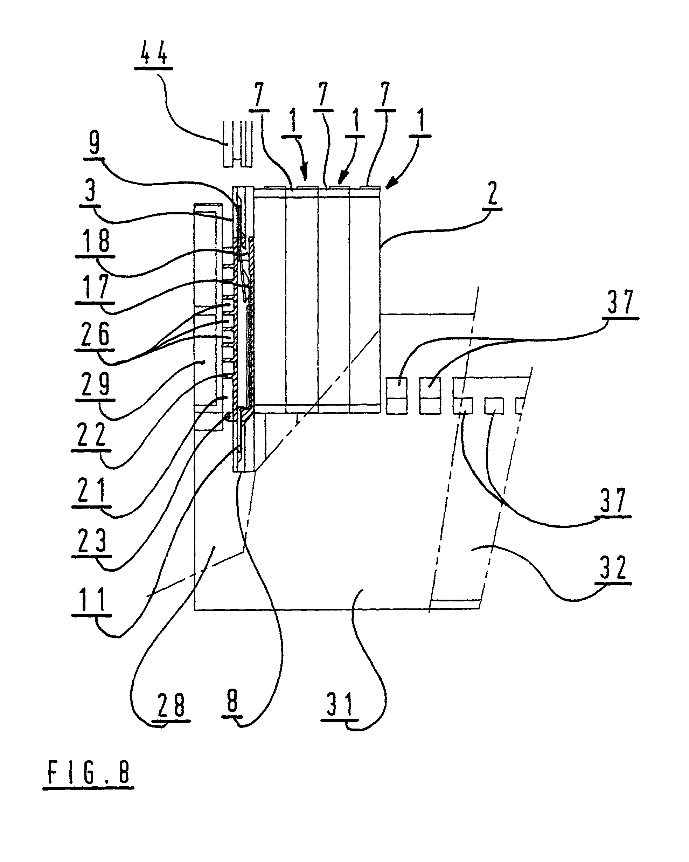

As may more particularly be seen in Figures 5 and 8, the rail having a U-shaped cross section forming the support frame 28 can have an unsymmetrical shape with one of the side arms 31 having a greater length than the other side arm 32. This means that the slot 34 on one side of the terminal strip can be deeper than the slot 34 on the other side of the terminal strip. Having slots of different depths improves the mechanical stability of the terminal strip 1.

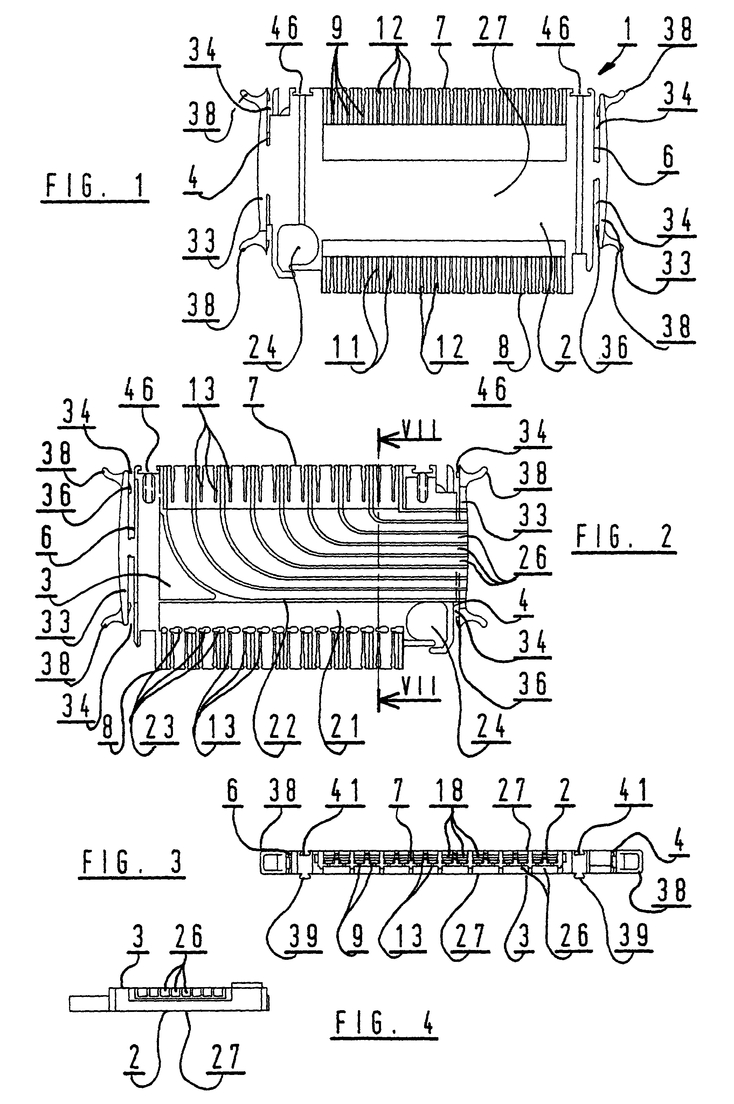

If, for example, 32 terminal strips are fitted onto a rail 28 having a given length, other means intended to fasten the terminal strips together have been provided. These means are in the form of dovetail-shaped tenons 39 (figure 3) protruding a few millimetres over the height of the lateral face 3 on which the lead-in channels 26 are provided. These tenons 39 mate with mortices 41 in the form of grooves running over the entire height of the terminal strip from the side having the lateral face 2 with the flat plate 27. This really allows the terminal strips to be bonded together, to place the maximum number of them on a rail 28, to efficiently close off the lead-in channels 26 with the flat plate 27 of the directly juxtaposed terminal strip and to provide excellent mutual mechanical cohesion of the terminal strips.

In order to improve the screening of the connections, a drain collector has been provided in the form of a metal tongue 42 (Figure 6) which will bear on an insulating upright 43 of the body of the terminal strip. This allows the drain wires to be gathered together to provide their earth connection through the support frame 28.

Provision has also been made for the possible insertion into the upper insulation-displacement contacts 9 of a plug 44 of a jumper (Figure 8) making it possible to make a cross-connection within a telephone, computer or other distribution frame.

To be able to recognize the various terminal strips among themselves, a label holder 46 has been provided on the upper longitudinal side 7. This label holder 46 is used either to slide on individual labels for each of the terminal strips or to slide on only a single long label, when all the terminal strips are closely juxtaposed alongside one another.

The present invention is not limited to the embodiment described and illustrated. Many modifications may be made without thereby departing from the context defined by the scope of the set of claims.

## Claims

1. Terminal strip for interconnecting electrical lines, especially telephone or computer lines, comprising a single row of mutually parallel first conducting elements (9) placed side-by-side, each first conducting element (9) having an insulation-displacement end configured to receive a line wire, that is oriented towards the upper longitudinal side (7) of the terminal strip (1), and a single row of mutually parallel, second conducting elements (11) placed side-by-side, each having an insulation-displacement end configured to receive a line wire, that is oriented towards the lower longitudinal side (8) of the terminal strip (1), the first (9) and second (11) conducting elements being in two parts (14, 16), and each first conducting element (9) being separated from the second conducting element (11) by a point of interruption (17), **characterized in that**
- the insulation-displacement end of the first (9) and second (11) conducting elements all lie within a same plane (P); and
- the point of interruption (17) is offset with respect to the plane (P) defined by the first (9) and second (11) conducting elements.

2. Terminal strip according to Claim 1, **characterized in that** the first conducting element (9) comprises at least one moveable flexible tab (14) which is positioned on a fixed part (16) of the second conducting element (11).

3. Terminal strip according to Claim 2, **characterized in that** the upper longitudinal side (7) has, adjacent to each first conducting element (9), access holes (18) for the insertion of a conducting test plug (19) or of an insulating interrupt plug, which will be inserted through the access hole (18) into the body of the terminal strip and adjacent to the point of interruption (17) between the flexible tab (14) and the fixed part (16).

4. Terminal strip according to one of the preceding claims, **characterized in that** the upper (7) and lower (8) longitudinal sides has a push-in slot (13) for each insulation-displacement end, the push-in slots (13) extend transversely from the upper (7) or lower (8) longitudinal sides and extend into the body of the terminal block along one of the lateral face.

5. Terminal strip according to Claim 4, **characterized in that** it includes lead-in channels (26) moulded or formed in, or attached to one of the lateral faces (3) of the terminal block, which are located on the same lateral face of the terminal block as the push-in slots (13), each of the channels (26) curving away from one of the transverse sides (4) in the direction of at least one of the push-in slots (13).

6. Terminal strip according to Claim 5, **characterized in that** it includes a smooth lateral face (27), on the opposite the face (3) having the push-in slots (13).

7. Terminal strip according to one of the preceding claims, **characterized in that** it includes interlocking means (39, 41), located on each of the two lateral faces such that the interlocking means (39) on one face (3) fits into the interlocking means (41) on the other face (2).

8. Terminal strip according to one of the preceding claims, **characterized in that** it includes a drain collector (42) near the upper longitudinal side (7).

9. Terminal strip according to one of the preceding claims, **characterized in that** it includes a label holder (29), or a plate, which will close off the lead-in channels (26) of the last terminal strip positioned on the rail forming the support frame (28), and a label holder (46) located on the upper longitudinal side (7).

## Patentansprüche

1. Anschlussleiste für elektrische Verbindungsleitungen, insbesondere Telefon- oder Computerleitungen, mit einer einzelnen Reihe von zueinander parallelverlaufenden, nebeneinanderangeordneten ersten Leitelementen (9), die jeweils ein Abisolierende zum Aufnehmen eines Leitungsdrahts aufweisen, welches in Richtung der oberen Längsseite (7) der Anschlussleiste (1) ausgerichtet ist, und einer einzelnen Reihe von zueinander parallelverlaufenden, nebeneinander angeordneten zweiten Leitelementen (11), die jeweils ein Abisolierende zum Aufnehmen eines Leitungsdrahts aufweisen, welches in Richtung der unteren Längsseite (8) der Anschlussleiste (1) ausgerichtet ist, wobei die ersten (9) und zweiten (11) Leitelemente in zwei Teilen (14,16) ausgebildet sind und jedes erste Leitelement (9) von dem zweiten Leitelement (11) durch einen Unterbrechungspunkt (17) getrennt ist,
**dadurch gekennzeichnet, dass**
- sämtliche Abisolierenden der ersten (9) und zweiten (11) Leitelemente in derselben Ebene (P) liegen; und
- der Unterbrechungspunkt (17) relativ zu der von den ersten (9) und zweiten (11) Leitelementen gebildeten Ebene (P) versetzt ist.

2. Anschlussleiste nach Anspruch 1, **dadurch gekennzeichnet, dass** das erste Leitelement (9) mindestens einen bewegbaren flexiblen Ansatz (14) aufweist, der an einem feststehenden Teil (16) des zweiten Leitelements (11) positioniert ist.

3. Anschlussleiste nach Anspruch 2, **dadurch gekennzeichnet, dass** die obere Längsseite (7) benachbart zu jedem ersten Leitelement (9) Zugangslöcher (18) zum Einsetzen eines Leit-Teststeckers (19) oder eines Isolierungs-Unterbrechungssteckers aufweist, der durch das Zugangsloch (18) in den Körper der Anschlussleiste und benachbart zu dem Unterbrechungspunkt (17) zwischen dem flexiblen Ansatz (14) und dem feststehenden Teil (16) eingesetzt wird.

4. Anschlussleiste nach einem der vorhergehenden Ansprüche, **dadurch gekennzeichnet, dass** die obere (7) und die untere (8) Längsseite einen Einschiebeschlitz (13) für jedes Abisolierende aufweist, wobei die Einschiebeschlitze (13) quer zu der oberen (7) oder der unteren (8) Längsseite und entlang einer der Seitenflächen in den Körper des Anschlussblocks verlaufen.

5. Anschlussleiste nach Anspruch 4, **dadurch gekennzeichnet, dass** sie Einführkanäle (26) aufweist, die geformt oder ausgebildet oder an einer der Seitenflächen (3) des Anschlussblocks angeordnet sind und die auf derselben Seitenfläche des Anschlussblocks angeordnet sind wie die Einschiebeschlitze (13), wobei jeder Kanal (26) in einer Krümmung von einer der Querseiten (4) weg in Richtung mindestens eines der Einschiebeschlitze (13) verläuft.

6. Anschlussleiste nach Anspruch 5, **dadurch gekennzeichnet, dass** sie eine glatte Seitenfläche (27) gegenüberliegend der Fläche (3) mit den Einschiebeschlitzen (13) aufweist.

7. Anschlussleiste nach einem der vorhergehenden Ansprüche, **dadurch gekennzeichnet, dass** sie eine Verriegelungseinrichtung (39,41) an jeder der beiden Seitenflächen aufweist, derart, dass die Verriegelungseinrichtung (39) an der einen Fläche (3) in die Verriegelungseinrichtung (41) an der anderen Fläche (2) passt.

8. Anschlussleiste nach einem der vorhergehenden Ansprüche, **dadurch gekennzeichnet, dass** sie einen Drain-Kollektor (42) nahe der oberen Längsseite (7) aufweist.

9. Anschlussleiste nach einem der vorhergehenden Ansprüche, **dadurch gekennzeichnet, dass** sie eine Etiketthalterung (29) oder eine Platte, die die Einführkanäle (26) der letzten Anschlussleiste abschließt, welche auf der den Stützrahmen (28) bildenden Schiene positioniert ist, und eine Etiketthalterung (46) an der oberen Längsseite (7) aufweist.

## Revendications

1. Barrette à bornes pour interconnecter des lignes électriques, en particulier des lignes téléphoniques ou informatiques, comportant une seule rangée de premiers éléments conducteurs mutuellement parallèles (9) placés côte à côte, chaque premier élément conducteur (9) ayant une extrémité autodénudante configurée pour recevoir un fil de ligne, qui est orientée en direction du côté longitudinal supérieur (7) de la barrette à bornes (1), et une seule rangée de seconds éléments conducteurs mutuellement parallèles (11) placés côte à côte, chacun ayant une extrémité autodénudante configurée pour recevoir un fil de ligne, qui est orientée en direction du côté longitudinal inférieur (8) de la barrette à bornes (1), les premiers (9) et seconds (11) éléments conducteurs étant en deux parties (14, 16), et chaque premier élément conducteur (9) étant séparé du second élément conducteur (11) par un point d'interruption (17), **caractérisée en ce que**
- toutes les extrémités autodénudantes des premiers (9) et seconds (11) éléments conducteurs se situent dans un même plan (P), et
- le point d'interruption (17) est décalé par rapport au plan (P) défini par les premiers (9) et seconds (11) éléments conducteurs.

2. Barrette à bornes selon la revendication 1, **caractérisée en ce que** le premier élément conducteur (9) comporte au moins une languette souple mobile (14) qui est positionnée sur une partie fixe (16) du second élément conducteur (11).

3. Barrette à bornes selon la revendication 2, **caractérisée en ce que** le côté longitudinal supérieur (7) a, adjacents à chaque premier élément conducteur (9), des trous d'accès (18) pour l'insertion d'une fiche de test de conduction (19) ou d'une fiche d'interruption d'isolation, qui sera insérée à travers le trou d'accès (18) dans le corps de la barrette à bornes et adjacente au point d'interruption (17) entre la languette souple (14) et la partie fixe (16).

4. Barrette à bornes selon l'une des revendications précédentes, **caractérisée en ce que** les côtés longitudinaux supérieur (7) et inférieur (8) ont une fente d'enfichage (13) pour chaque extrémité autodénudante, les fentes d'enfichage (13) s'étendent transversalement à partir des côtés longitudinaux supérieur (7) et inférieur (8) et s'étendent dans le corps du bomier le long de l'une des faces latérales.

5. Barrette à bornes selon la revendication 4, **caractérisée en ce qu'**elle inclut des canaux d'entrée (26) moulés ou formés dans l'une des faces latérales (3) du bomier ou reliés à celle-ci, qui sont positionnés sur la même face latérale du bornier que les fentes d'enfichage (13), chacun des canaux (26) s'éloignant en s'incurvant de l'un des côtés transversaux (4) dans la direction d'au moins une des fentes d'enfichage (13).

6. Barrette à bornes selon la revendication 5, **caractérisée en ce qu'**elle inclut une face latérale lisse (27), sur la face opposée (3) ayant les fentes d'enfichage (13).

7. Barrette à bornes selon l'une des revendications précédentes, **caractérisée en ce qu'**elle inclut des moyens de blocage mutuel (39, 41), positionnés sur chacune des deux faces latérales de sorte que les moyens de blocage mutuel (39) agencés sur une face (3) s'insèrent dans les moyens de blocage mutuel (41) agencés sur l'autre face (2).

8. Barrette à bornes selon l'une des revendications précédentes, **caractérisée en ce qu'**elle inclut un collecteur de drain (42) près du côté longitudinal supérieur (7).

9. Barrette à bornes selon l'une des revendications précédentes, **caractérisée en ce qu'**elle inclut un porte-étiquette (29), ou une plaque, qui obturera les canaux d'entrée (26) de la dernière barrette à bornes positionnée sur le rail formant le châssis de support (28), et un porte-étiquette (46) positionné sur le côté longitudinal supérieur (7).
